(19) Europäisches Patentamt / European Patent Office / Office européen des brevets

(11) **EP 2 770 786 B1**

(12) **EUROPEAN PATENT SPECIFICATION**

(45) Date of publication and mention
of the grant of the patent:
**14.06.2017  Bulletin 2017/24**

(21) Application number: **12854055.6**

(22) Date of filing: **14.11.2012**

(51) Int Cl.:
*H04W 52/18* (2009.01)     *H04W 52/38* (2009.01)
*H04W 52/24* (2009.01)

(86) International application number:
**PCT/CN2012/084553**

(87) International publication number:
**WO 2013/078946 (06.06.2013 Gazette 2013/23)**

(54) **D2D POWER CONTROL METHOD, USER EQUIPMENT, BASE STATION AND COMMUNICATION SYSTEM**

D2D LEISTUNGSREGELUNGSVERFAHREN, BENUTZERVORRICHTUNG, BASISSTATION UND KOMMUNIKATIONSSYSTEM

PROCÉDÉ DE COMMANDE DE PUISSANCE D2D, ÉQUIPEMENT UTILISATEUR, STATION DE BASE ET SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2011  CN 201110384798**

(43) Date of publication of application:
**27.08.2014  Bulletin 2014/35**

(73) Proprietor: **Huawei Technologies Co., Ltd.
Longgang District
Shenzhen, Guangdong 518129 (CN)**

(72) Inventors:
• **DAI, Mingzeng
Shenzhen
Guangdong 518129 (CN)**
• **ZENG, Qinghai
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2011/138495      WO-A1-2011/138495
WO-A2-2011/075704      CN-A- 102 204 365
US-A1- 2005 030 976      US-A1- 2009 325 625
US-A1- 2010 110 999      US-B1- 7 151 795**

**Description**

**TECHNICAL FIELD**

The present invention relates to communications technologies, and in particular, to a D2D power control method, a user equipment, a base station, and a communication system.

**BACKGROUND**

In a wireless communication system, to get rid of impact from path loss and enable a signal to reach specified signal quality, a transmit power of a user equipment (user equipment, UE for short) at a transmitting end usually needs to be adjusted and controlled. An adopted method is usually as follows: the UE at the transmitting end periodically sends a power headroom report (Power Headroom Report, PHR for short) to a base station to report a difference between the transmit power and a maximum transmit power of the UE, that is, a power headroom (Power Headroom, PH for short), so that the base station adjusts the transmit power of the UE according to the PH. When the UE calculates the transmit power, uplink path loss needs to be considered to compensate path loss in a channel, and because uplink slow fading is relevant to downlink slow fading, downlink path loss is usually used to replace uplink path loss.

With the development of mobile communications technologies, more and more mobile communication systems emerge. Device-to-device (Device-to-device, D2D for short) communication may become an important communication mode in a next-generation cellular communication network. In the D2D communication mode, two UEs in a network can communicate with each other directly, and can communicate, under control of a base station, with each other by using the same frequency spectrum resources as those of the network. Likewise, to enable the signal to reach the specified signal quality, it is also required to adjust and control the transmit power of the UE at the transmitting end in the D2D. However, in the existing D2D mode, a method for adjusting the power of the UE at the transmitting end is unavailable, and the transmit power of the UE at the transmitting end cannot be effectively controlled.

US 2009/325625 A1 discloses that a network determines that a first radio node commnicatinig on a radio resource with a second radio node is interfering with a third radio node communicating on the radio resource with the network.

**SUMMARY**

An objective of the present invention is to provide a D2D power control method, a user equipment, a base station, and a communication system, so as to implement power control on a device at a transmitting end in D2D.

In one aspect, the present invention provides a D2D power control method, including:

receiving, by a first user equipment UE, instruction information from a base station, to receive a reference signal sent by a second UE;

receiving, by the first user equipment UE, the reference signal sent by the second UE;

obtaining, by the first UE, a transmit power of the first UE according to the reference signal;

sending, by the first UE, data to the second UE based on the transmit power of the first UE wherein the second UE obtains a first adjustment reference value according to the data and sends a detection control information carrying the first adjustment reference value to the base station based on a comparison of the first adjustment reference value with a second adjustment reference value configured and sent by the base station;

receiving, by the first UE, power adjustment information which is sent by the base station according to the first adjustment reference value, and

adjusting, by the first UE, the transmit power of the first UE according to the power adjustment information;

wherein the first adjustment reference value comprises a signal to interference plus noise ratio SINR or a block error ratio BLER, and the second adjustment reference value comprises a SINR threshold or a BLER threshold.

In another aspect, the present invention provides a D2D power control method, including:

receiving, by a second user equipment UE, instruction information from a base station, to send a reference signal to a first UE; sending, by the second user equipment UE, the reference signal to the first UE;

receiving, by the second UE, data which is sent by the first UE based on a transmit power of the first UE;

obtaining, by the second UE, a first adjustment reference value according to the received data and a second adjustment reference value configured and sent by the base station;

sending, by the second UE, a detection control information carrying the first adjustment reference value to the base station based on a comparison of the first adjustment reference value with the second adjustment reference value;

wherein power adjustment information according to the first adjustment reference value is sent from the base station to the first UE, the transmit power of the first UE is adjusted by the first UE according to the power adjustment information, and the first adjustment reference value comprises a signal to interference plus noise ratio SINR or a block error ratio BLER, and the second adjustment reference value comprises a SINR threshold or a BLER threshold.

In still another aspect, the present invention provides a D2D power control method, including:

sending, by a base station, instruction information of a reference signal to a first user equipment UE and a second UE;
sending, by the base station, a second adjustment reference value to the second UE;
receiving, by the base station, a detection control information carrying a first adjustment reference value sent by the second UE based on a comparison of the first adjustment reference value with the second adjustment reference value; and
sending, by the base station, power adjustment information to the first UE according to the first adjustment reference value, the power adjustment information being used by the first UE to adjust the transmit power of the first UE;
wherein the first adjustment reference value is obtained by the second UE according to data which is sent by the first UE based on transmit power of the first UE according to the reference signal;
the instruction information is used to instruct the first UE to receive the reference signal sent by the second UE, and instruct the second UE to send the reference signal to the first UE; and

the first adjustment reference value comprises a signal to interference plus noise ratio SINR or a block error ratio BLER, and the second adjustment reference value comprises a SINR threshold or a BLER threshold.

In still another aspect, the present invention provides a user equipment UE, including:

a receiver (73), configured to receive instruction information sent by a base station to instruct the UE to receive a reference signal sent by a second UE;
the receiver (73) further configured to receive the reference signal sent by the second user equipment UE, and obtain a transmit power of the UE according to the reference signal;
a transmitter (72), configured to send data to the second UE based on the transmit power of the UE wherein the second UE obtains a first adjustment reference value according to the data and sends a detection control information carrying the first adjustment reference value to the base station based on a comparison of the first adjustment reference value with a second adjustment reference value configured and sent by the base station;
the receiver (73), further configured to receive power adjustment information which is sent by the base station according to the first adjustment reference value;
a processor (71), configured to adjust the transmit power of the UE according to the power adjustment information;

wherein the first adjustment reference value comprises a signal to interference plus noise ratio SINR or a block error ratio BLER, and the second adjustment reference value comprises a SINR threshold or a BLER threshold.

In still another aspect, the present invention provides a user equipment UE, including:

a receiver configured to receive instruction information sent by a base station to instruct the UE to send a reference signal to a first UE;
a transmitter, configured to send the reference signal to the first UE;
the receiver further configured to receive data which is sent by the first UE based on a transmit power of the first UE, and obtain a first adjustment reference value according to the data and a second adjustment reference value configured and sent by a base station;
the transmitter (82), further configured to send a detection control information carrying the first adjustment reference value to the base station based on a comparison of the first adjustment reference value with the second adjustment reference value;

wherein power adjustment information according to the first adjustment reference value is sent from the base station to the first UE, the transmit power of the first UE is adjusted by the first UE according to the power adjustment information, and the first adjustment reference value comprises a signal to interference plus noise ratio SINR or a block error ratio BLER, and the second adjustment reference value comprises a SINR threshold or a BLER threshold.

In still another aspect, the present invention provides a communication system, including a user equipment according to the present invention and another user equipment according to the present invention.

In the D2D power control method, the user equipment, the base station, and the communication system according to the present invention, the first UE receives the reference signal sent by the second UE, obtains the transmit power of the first UE according to the reference signal, and adjusts the transmit power of the first UE itself according to the power adjustment information sent by the base station, thereby solving the problem in the prior art that the transmit power of the first UE cannot be adjusted in D2D and implementing the power control on the first UE in the D2D.

## BRIEF DESCRIPTION OF DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.

FIG. 1 is an architecture diagram of a D2D system applied in an embodiment of a D2D power control method according to the present invention;

FIG. 2 is a schematic flow chart of an exemplary embodiment of a D2D power control method according to the present invention;

FIG. 3 is a schematic flow chart of another exemplary embodiment of a D2D power control method according to the present invention;

FIG. 4 is a schematic flow chart of another exemplary of a D2D power control method according to the present invention;

FIG. 5 is a schematic signaling diagram of still another exemplary embodiment of a D2D power control method according to the present invention;

FIG. 6 is a schematic signaling diagram of still another exemplary embodiment of a D2D power control method according to the present invention;

FIG. 7 is a schematic structural diagram of an exemplary embodiment of a UE according to the present invention;

FIG. 8 is a schematic structural diagram of another exemplary embodiment of a UE according to the present invention; and

FIG. 9 is a schematic structural diagram of an exemplary embodiment of a base station according to the present invention.

## DESCRIPTION OF EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

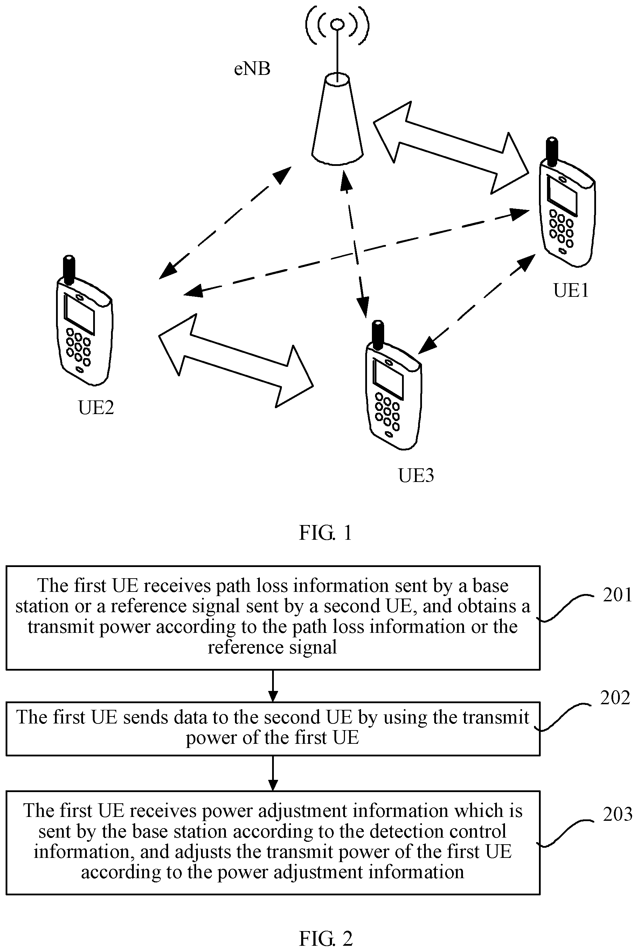

The embodiments of the present invention are applicable to a D2D system, and the D2D system may be applied in systems such as a long term evolution (Long Term Evolution, LTE for short) system and a 2G/3G network system. An LTE scenario is taken as an example. Referring to FIG. 1, a UE1 communicates with a base station at a network side, a UE2 directly communicates with a UE3, and the two kinds of communication described above can use the same frequency spectrum resources; the direct communication mode between the UE2 and the UE3 is a D2D communication mode, and the frequency spectrum resources used by the UE2 and the UE3 are allocated by the base station.

In the following embodiments, the UE2 in FIG. 1 is defined as a UE at a transmitting end and is called a first UE for short, and the UE3 in FIG. 1 is defined as a UE at a receiving end and is called a second UE for short, where the first UE can send data to the second UE.

### Example 1

FIG. 2 shows an embodiment of a D2D power control method according to the present invention, which includes:

201: A first UE receives path loss information sent by a base station or a reference signal sent by a second UE, and obtains a transmit power of the first UE according to the path loss information or the reference signal.

Optionally, when the first UE receives the reference signal sent by the second UE, the reference signal may be a sounding reference signal (Sounding Reference Signal, SRS for short) or a demodulation reference signal (Demodulation Reference Signal, DM-RS for short). In this embodiment, for example, the base station may deliver configuration parameters corresponding to the reference signal to the first UE and the second UE in advance. For example, the base station may deliver, to the second UE, configuration parameters (such as SRS bandwidth and a frequency domain location) used for instructing the second UE to send the SRS, and the second UE may send the SRS according to the configuration parameters. For another example, the base station may deliver, to the first UE, configuration parameters (such as SRS bandwidth and a frequency domain location) used for instructing the first UE to receive the SRS and optionally, include the instruction of receiving the SRS, and the first UE may receive the SRS according to the configuration parameters.

Optionally, after receiving the reference signal, the first UE may obtain a receive power of the signal; and a transmit power of the signal may be sent by the second UE or the base station to the first UE. The first UE may obtain a path loss by calculating a difference between the receive power and the transmit power, where the path loss is a path loss between the first UE and the second UE. In this case, the first UE can obtain, through calculation, a transmit power according to the path loss.

Optionally, the first UE may also receive the path loss information sent by the base station, where the path loss information may be a reference path loss sent by the base station or the transmit power of the first UE.

Optionally, the first UE may receive the path loss information sent by the base station, where the path loss information may be a reference path loss (also called an initial path loss), and the first UE can obtain, through calculation, the transmit power of the first UE itself according to the reference path loss. For another example, the first UE may also receive a transmit power sent by the base station, and use the transmit power as a transmit power for sending data. In this case, the first UE does not need to calculate the transmit power according to the path loss information, but can directly obtain the transmit power from the base station.

202: The first UE sends data to the second UE by using the transmit power of the first UE.

The first UE sends data to the second UE by using the transmit power obtained in 201. After receiving the data, the second UE may obtain an adjustment reference value according to the data, where the adjustment reference value includes, for example, a signal to interference plus noise ratio/block error ratio (Signal to Interference plus Noise Ratio/Block Error Ratio, SINR/BLER for short) (in the embodiments of the present invention, the SINR/BLER indicates an SINR or a BLER). The SINR/BLER may be referred to as a signal-to-noise ratio/block error ratio for short. In the specific implementation, the adjustment reference value may also be another parameter value, which is set according to a specific method.

Optionally, the second UE may also send detection control information to the base station according to the adjustment reference value. For example, the detection control information may be a request sent by the second UE for increasing or decreasing the transmit power of the first UE after the second UE makes judgment according to the adjustment reference value; the detection control information may also carry the adjustment reference value to be reported to the base station, so that the base station can determine, according to the reported adjustment reference value, whether to increase or decrease the transmit power of the first UE.

Optionally, the adjustment reference value may be, for example, the SINR/BLER, and the second UE can determine, according to the SINR/BLER, whether to increase or decrease the transmit power of the first UE. Specifically, the second UE compares the SINR/BLER with an SINR/BLER threshold preset by the base station, where the SINR/BLER threshold may include a low threshold and a high threshold; if the SINR/BLER is smaller than the low threshold, it indicates that the transmit power of the first UE needs to be increased, and if the SINR/BLER is greater than the high threshold, it indicates that the transmit power of the first UE needs to be decreased. When the second UE makes the judgment, the base station sends the SINR/BLER threshold to the second UE in advance.

203: The first UE receives power adjustment information which is sent by the base station according to the detection control information, and adjusts the transmit power of the first UE according to the power adjustment information.

The first UE may receive the power adjustment information sent by the base station, where the power adjustment information is obtained by the base station according to the detection control information sent by the second UE. For example, if the base station obtains, according to the detection control information, that the transmit power of the first UE needs to be increased, the base station increases the transmit power of the first UE.

Optionally, the power adjustment information may include an adjustment value/compensation value of the power, and an adjusted power value, and the first UE can adjust the transmit power according to the power adjustment information. After adjusting the transmit power, the first UE sends data again by using the adjusted power, and the second UE calculates the adjustment reference value of the data again. Whether the power adjustment is proper is evaluated, and 202 to 203 in this embodiment are repeatedly performed until the transmit power is adjusted to reach a proper adjustment reference value.

In the D2D power control method according to this embodiment, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

**Example 2**

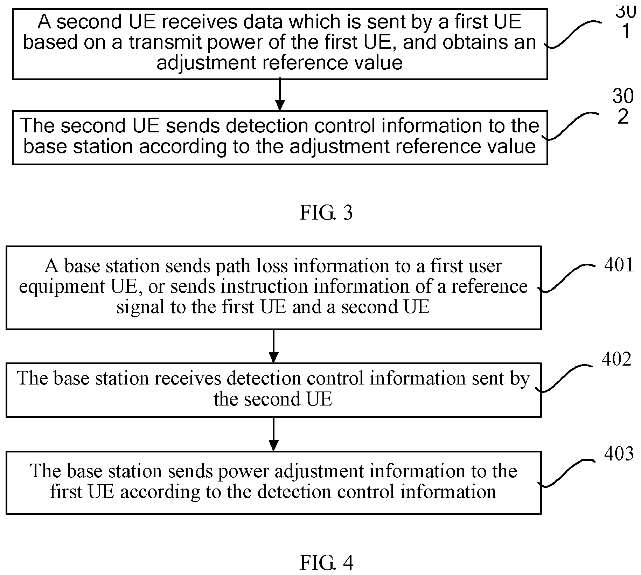

FIG. 3 shows another embodiment of a D2D power control method according to the present invention, which includes:

301: A second UE receives data which is sent by a first UE based on a transmit power of the first UE, and obtains an adjustment reference value.

The transmit power adopted by the first UE is obtained by the first UE according to path loss information sent by a base station or a reference signal sent by the second UE. When the first UE obtains the transmit power according to the reference signal sent by the second UE, the second UE receives, in advance, configuration parameters sent by the base station for instructing the second UE to send the reference signal, and sends the reference signal according to the configuration parameters. The reference signal is, for example, an SRS or a DM-RS.

After receiving the reference signal, the first UE may obtain a receive power of the reference signal; the second UE or the base station may also send a transmit power of the reference signal to the first UE; and the first UE may obtain a path loss by calculating a difference between the receive power and the transmit power of the reference signal, where the path loss is a path loss between the first UE and the second UE, and obtain, through calculation, the transmit power according to the path loss.

302: The second UE sends detection control information to the base station according to the adjustment reference value.

Optionally, before the second UE receives the data which is sent by the first UE by using the transmit power, the second UE also receives the adjustment reference value sent by the base station, such as an SINR/BLER threshold or a report period. For example, the threshold of the adjustment reference value include a first threshold and a second threshold, where the first threshold is smaller than the second threshold.

Optionally, the adjustment reference value includes a first adjustment reference value and a second adjustment reference value, the first adjustment reference value includes at least one of the following: a signal to interference plus noise ratio SINR and a block error ratio BLER of the data, and the second adjustment reference value includes at least one of the following: an SINR threshold and a BLER threshold. For example, if the second adjustment reference value is the first threshold or the second threshold and the first threshold is smaller than the second threshold, sending, by the second UE, the detection control information to the base station according to the adjustment reference value is specifically: comparing, by the second UE, the first adjustment reference value with the second adjustment reference value; if the first adjustment reference value is smaller than the first threshold, sending, by the second UE, the detection control information to the base station for requesting increase of the transmit power of the first UE; and if the first adjustment reference value is greater than the second threshold, sending, by the second UE, the detection control information to the base station for requesting decrease of the transmit power of the first UE.

Optionally, if the first adjustment reference value is an SINR/BLER, and the second adjustment reference value is an SINR/BLER threshold which may be the first threshold or the second threshold, sending, by the second UE, the detection control information to the base station according to the SINR/BLER is specifically: comparing, by the second UE, the SINR/BLER with the SINR/BLER threshold; if the SINR/BLER is smaller than the first threshold, or the SINR/BLER is greater than the second threshold, or the report period is reached, carrying the SINR/BLER in the detection control information and directly reporting the SINR/BLER to the base station, and comparing, by the base station, the SINR/BLER with an SINR/BLER threshold stored by the base station, and determining whether to increase or decrease the transmit power of the first UE.

For example, if the base station determines, according to the detection control information, that the transmit power of the first UE needs to be increased, the base station obtains power adjustment information and sends it to the first UE, where the power adjustment information may include a power compensation value and the like, and the first UE adjusts the transmit power of the first UE according to the power adjustment information.

In the D2D power control method according to this embodiment, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

**Example 3**

FIG. 4 shows another embodiment of a D2D power control method according to the present invention, which includes:

401: A base station sends path loss information to a first user equipment UE, or sends instruction information of a reference signal to the first UE and a second UE.

The instruction information is used to instruct the first UE to receive a reference signal sent by the second UE, or instruct the second UE to send the reference signal to the first UE.

402: The base station receives detection control information which is sent by the second UE according to an adjustment reference value.

The adjustment reference value is obtained by the second UE according to data which is sent by the first UE by using a transmit power, where the transmit power is obtained by the first UE according to path loss information sent by the base station or a reference signal sent by the second UE.

Optionally, for example, the instruction information sent by the base station may be a transmit power sent by the base station to the first UE, and the first UE can send data based on the transmit power; or, the path loss information may be a reference path loss sent by the base station to the first UE, and the first UE can obtain, through calculation, the transmit power according to the reference path loss. After obtaining the transmit power, the first UE can send data to the second UE by using the transmit power.

Optionally, before the second UE sends the reference signal, the base station may send, to the second UE, a configuration parameter for instructing the second UE to send the reference signal, and send, to the first UE, a configuration parameter for instructing the first UE to receive the reference signal; the second UE may send the reference signal according to the corresponding configuration parameter, and the first UE may receive the reference signal according to the corresponding configuration parameter. The reference signal may be an SRS or a DM-RS. The first UE may obtain a path loss between the first UE and the second UE according to a receive power and a transmit power of the reference signal, and obtain, through calculation, the transmit power according to the path loss.

After the first UE sends the data to the second UE according to the transmit power, the second UE may obtain the adjustment reference value, and obtain the detection control information according to the adjustment reference value. The adjustment reference value includes a first adjustment reference value and a second adjustment reference value, where the first adjustment reference value is, for example, an SINR/BLER, the second adjustment reference value is a first threshold or a second threshold, and the first threshold is smaller than the second threshold. The base station may also send a report period to the second UE.

Optionally, sending, by the second UE, the detection control information according to the adjustment reference value, for example, is: sending the detection control information when the first adjustment reference value is smaller than the first threshold, or the first adjustment reference value is greater than the second threshold, or the report period is reached, where the detection control information is mainly used to report the first adjustment reference value to the base station.

Optionally, sending, by the second UE, the detection control information according to the adjustment reference value, for example, is: sending the detection control information used for requesting increase of the transmit power of the first UE when the first adjustment reference value is smaller than the first threshold, and sending the detection control information used for requesting decrease of the transmit power of the first UE when the first adjustment reference value is greater than the second threshold.

403: The base station sends power adjustment information to the first UE according to the detection control information.

Specifically, when the base station receives the detection control information which is sent by the second UE and is used for reporting the adjustment reference value, the base station determines, according to the adjustment reference value and an adjustment reference threshold stored by the base station, whether to increase or decrease the transmit power of the first UE, where the adjustment reference thresholds include a first threshold and a second threshold, and the first threshold is smaller than the second threshold.

Optionally, for example, if an adjustment reference value is an SINR/BLER, the base station compares the SINR/BLER with an SINR/BLER threshold; if the SINR/BLER is smaller than the first threshold, the base station obtains an increase instruction used for increasing the transmit power of the first UE, and sends the power adjustment information to the first UE according to the increase instruction and the power headroom of the first UE; and if the SINR/BLER is greater than the second threshold, the base station obtains a decrease instruction used for decreasing the transmit power of the first UE, and sends the power adjustment information to the first UE according to the decrease instruction and the power headroom of the first UE.

Optionally, for example, the power adjustment information may include a compensation value of a reference path loss and/or an adjusted path loss value, so that the first UE adjusts the transmit power according to the compensation value of the reference path loss and/or the adjusted path loss value. The term "and/or" herein means that both of the compensation value of the reference path loss and the adjusted path loss value exist at the same time, or merely one of the compensation value of the reference path loss and the adjusted path loss value exists.

In the D2D power control method according to this embodiment, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

Optionally, in the D2D power control method according to this embodiment, the first UE may send power report information to the base station, so that the base station obtains the power headroom of the first UE according to the power report information and adjusts the power of the first UE according to the detection control information sent by the second UE and the power headroom.

The first UE may send the power report information to the base station in the following two cases.

In one case, when the first UE obtains the transmit power according to the reference signal sent by the base station, the base station can learn the transmit power of the first UE. For example, when the base station directly sends the transmit power to the first UE, the base station learns the transmit power of the first UE; and when the base station sends the reference path loss to the first UE, the base station also learns the transmit power of the first UE according to the path loss. In this case, the first UE only needs to report a maximum transmit power of the first UE to the base station, and the base station can obtain, through calculation, the power headroom of the first UE according to the maximum transmit power and the transmit power of the first UE.

In another case, when the first UE obtains the transmit power according to the reference signal sent by the second UE, because the first UE calculates the path loss and obtains the transmit power according to the path loss, the base station does not learn the transmit power of the first UE, and the first UE is required to directly report the power headroom to the base station, where the power headroom may be obtained by calculating, by the first UE, a difference between the maximum transmit power of the first UE and the transmit power.

In this example, when the power headroom is reported, the reporting of the first UE may be configured in a timer triggering manner. For example, the base station may configure three parameters: a prohibit PHR-timer (prohibit PHR-timer), a periodic PHR-timer (periodic PHR-timer), and a path loss variation value threshold (Pathloss_D2DChange), and send the three parameters to the first UE for configuration. The first UE may start the timers described above, and report the power headroom to the base station when the prohibit PHR-timer times out and a difference between the path loss calculated this time and the path loss reported to the base station last time is greater than a set Pathloss_D2DChange; or report the power headroom to the base station when the periodic PHR-timer times out.

Based on the description about the embodiment of the D2D power control method according to the present invention, the D2D power control method is further illustrated in detail below through a specific example; and the above two power headroom report manners are also described in the following.

## Example 4

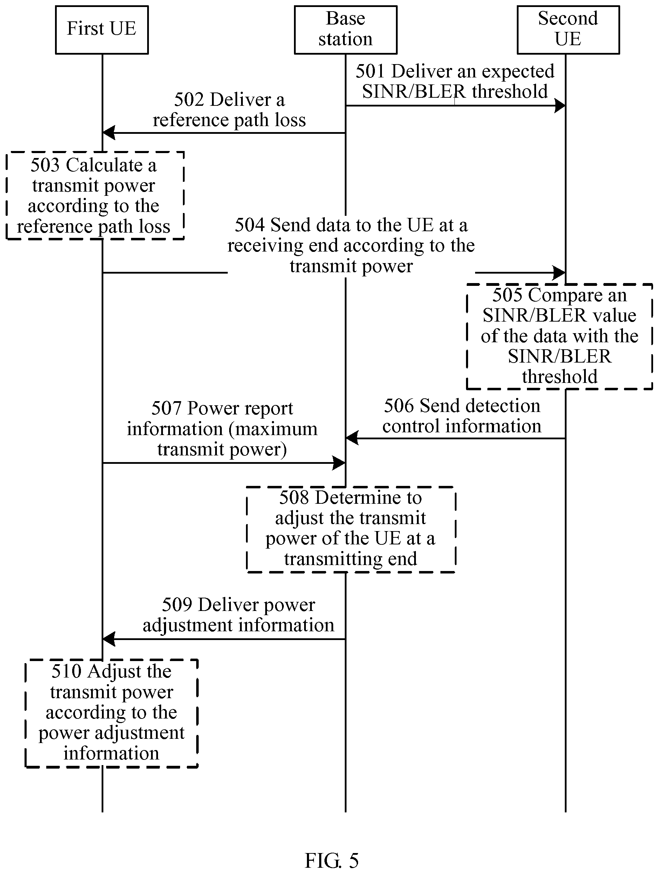

FIG. 5 shows another aspect of a D2D power control method according to the present invention. In this embodiment, a first UE obtains a transmit power according to a reference signal sent by a base station, and the first UE directly reports its maximum transmit power so that the base station obtains a power headroom. The method may include:

501: A base station delivers an expected SINR/BLER threshold to a second UE.

Optionally, the SINR/BLER threshold may correspond to a service type or a bearer level, that is, data sent by the first UE to the second UE may correspond to different service types or bearer channels for sending the data may correspond to specific bearer levels; and when evaluating the reception of the data, the second UE needs to use the SINR/BLER threshold corresponding to the service type or the bearer level of the data.

Reference may be made to Table 1, where a service type is taken as an example; and reference may be made to Table 2, where a bearer identity is taken as an example (the bearer identity corresponds to a corresponding bearer level).

**Table 1 BLER Thresholds corresponding to Service Types**

| Service type (Service type) | BLER threshold |
|---|---|
| Conversational voice (Conversational Voice) | $10^{-2}$ |
| Buffered streaming (Buffered streaming) | $10^{-6}$ |

**Table 2 BLER Thresholds corresponding to Bearer Identities**

| DRB identity | BLER threshold |
|---|---|
| DRB1 | $10^{-3}$ |
| DRB2 | $10^{-6}$ |

In addition to the service type and bearer identity, the SINR/BLER threshold may also correspond to another parameter, for example, a QoS class identifier (QoS Class Identifier, QCI for short), which is not enumerated herein.

Optionally, the SINR/BLER threshold described above may include a low threshold (which can be called a first threshold) and a high threshold (which can be called a second threshold). The objective of setting the two thresholds is as follows: the second UE may compare the evaluated SINR/BLER of the data with the two thresholds; if the SINR/BLER is between the low threshold and the high threshold, it can be considered that the SINR/BLER falls in a proper range and the transmit power of a UE at a transmitting end is not adjusted; and if the SINR/BLER is smaller than the low threshold or greater than the high threshold, it can be considered that the SINR/BLER is improper and the transmit power of the UE at the transmitting end needs to be adjusted.

In this aspect, the base station may deliver an expected SINR/BLER threshold to the second UE through system information (system information) or an RRC dedicated message (RRC dedicated signaling).

502: The base station delivers path loss information such as a reference path loss to the first UE, where the reference path loss may also be called an initial path loss.

503: The first UE calculates a transmit power according to the reference path loss.

In combination with an uplink open-loop power control mechanism of LTE R8, the first UE calculates the transmit power by using the following formula:

$$P_{TX}(i) = \min\{P_{CMAX}, 10\log_{10}(M_{TX}(i) + P_{o\_TX}(j) + \alpha PL_{Initial})\}$$

where $P_{CMAX}$ is a maximum transmit power (dBm) of the first UE and is determined by a UE type;

$M_{TX}$ is the number of resource blocks RBs assigned by a current subframe to the first UE, and is determined by scheduling;

$P_{o\_TX}$ is a transmit power;

$\alpha$ is a path loss compensation factor; and

$PL_{Initial}$ is a reference path loss delivered by the base station.

504: The first UE sends data to the second UE according to the calculated transmit power.

Optionally, in this example, the base station may also directly deliver the transmit power to the first UE in 502; in this case, 503 can be deleted, and the first UE directly performs 504 to send data to the second UE based on the transmit power delivered by the base station.

505: The second UE obtains, through parsing, the SINR/BLER of the received data, and compares the SINR/BLER with the SINR/BLER threshold.

The second UE compares the SINR/BLER obtained through parsing with the expected SINR/BLER threshold configured and delivered by the base station, and specifically, compares the SINR/BLER obtained through parsing with the low threshold and the high threshold.

506: The second UE sends detection control information to the base station according to a comparison result of the SINR/BLER.

Optionally, for example, if the SINR/BLER obtained through parsing is smaller than the the low threshold of the expected SINR/BLER, the detection control information used for requesting the base station to increase the transmit power of the first UE may be sent in this step, and if the SINR/BLER obtained through parsing is greater than the high threshold of the expected SINR/BLER, the detection control information used for requesting the base station to decrease the transmit power of the first UE may be sent in this step.

In this step, a specific manner of sending the detection control information may be: to use a radio resource control (Radio Resource Control, RRC for short) dedicated message, or a media access control-control element (Media Access Control-Control Element, MAC CE for short).

507: The first UE sends power report information to the base station.

A formula of calculating the power headroom is $PH = P_{CMAX} - P_{TX}$, where $P_{CMAX} = \max\{P_{EMAX}, P_{PowerClass}\}$, $P_{EMAX}$ is a maximum transmit power of a UE allowed by a cell, and $P_{PowerClass}$ is a maximum transmit power of a UE related to a UE type.

In this example, because the first UE determines the transmit power according to the reference signal sent by the base station, the base station can learn $P_{TX}$. In this step, the first UE only needs to report the maximum transmit power to the base station through the power report information, and the base station can calculate the power headroom (PH) of the first UE, where the maximum transmit power refers to $P_{PowerClass}$ or $P_{CMAX}$.

Optionally, a specific manner of the power report information may be, for example, an RRC dedicated message or a MAC CE. In addition, the sending order of this step is not limited, that is, as long as the first UE sends the power report information to the base station before the following 508.

508: After receiving the detection control information sent by the second UE, the base station determines whether to adjust the transmit power of the first UE.

In this step, when the base station determines whether to adjust the transmit power of the first UE, overall consideration of the detection control information sent by the second UE and the power headroom of the first UE is needed, and the interference of the power adjustment of the first UE to other UEs may be further considered.

Optionally, for example, if the base station determines, according to the interference to other UEs or the power headroom of the first UE, that the power of the first UE cannot be increased, the base station may notify the second UE that the transmit power of the first UE cannot be increased and optionally carry a cause value to the second UE, where the cause value, for example, may be the following: the first UE has no power headroom, the interference to a third-party UE is excessively great, and the like.

If a determination result of the base station is that the transmit power of the first UE needs to be increased and can be increased, continue to perform 509.

509: The base station delivers power adjustment information to the first UE.

Optionally, the power adjustment information in this example may be one of or a combination of the following: an adjusted path loss value, a compensation value of a reference path loss, an adjustment value/compensation value of the power, an adjusted power value, and the like.

Optionally, a message for delivering the power adjustment information may be the RRC dedicated message or the MAC CE, or an existing transmit power control (Transmit Power Control, TPC for short) command is expanded, including design of a single RNTI value, such as TPC-D2D-RNTI, so that the UE can easily recognize the command.

510: The first UE adjusts the transmit power according to the power adjustment information.

Optionally, for example, taking the compensation value $\nabla PL$ of the reference path loss delivered by the base station as an example, the transmit power evaluated by the first UE is as follows:

$$P_{TX}(i) = \min\{ P_{CMAX}, 10 \log_{10}(M_{TX}(i) + P_{o\_TX}(j) + \alpha(PL_{Initial} + \nabla PL)\}.$$

After adjusting the transmit power, the first UE sends the data to the second UE again by using the adjusted transmit power. After receiving the data, the second UE performs 505 to evaluate the SINR/BLER, and determines whether to request the base station to adjust the transmit power of the first UE. 506 to 510 are repeatedly performed, until the expected SINR/BLER is obtained.

Optionally, in the above description, the second UE compares the SINR/BLER (a first adjustment reference value) with the SINR/BLER threshold (a second adjustment reference value); and the second UE may also report the SINR/BLER to the base station, and the base station compares the SINR/BLER with the SINR/BLER threshold.

Optionally, when the base station compares the SINR/BLER with the SINR/BLER threshold, the base station needs to deliver configuration information to the second UE for reporting the SINR/BLER. The configuration information is used to set a manner of reporting the SINR/BLER. For example, an event triggering manner may be used to configure the SINR/BLER threshold for the second UE, so that the second UE can determine, according to the SINR/BLER threshold, whether to report the SINR/BLER to the base station. Or, a periodic triggering manner may be used to configure a report period of the SINR/BLER for the second UE, where optionally, a start point of the period, that is, the time when the second UE starts periodic triggering, may be included. Both of the SINR/BLER threshold and the report period can be associated with a QCI, a bearer identity, and the like. Optionally, a message for the base station to deliver SINR/BLER report configuration may be system information (system information) or an RRC dedicated message (RRC dedicated signaling).

When the second UE obtains, through parsing, the SINR/BLER of the received data, the second UE may determine whether a report triggering condition is met. For example, if an event triggering manner is configured, the second UE compares the SINR/BLER obtained through parsing with the expected SINR/BLER threshold delivered by the base station, and specifically, compares the SINR/BLER obtained through parsing with the low threshold and the high threshold; if the SINR/BLER obtained through parsing is smaller than or equal to the low threshold of the SINR/BLER or the SINR/BLER obtained through parsing is greater than or equal to the high threshold of the expected SINR/BLER, the second UE sends the detection control information to the base station and reports the SINR/BLER to the base station; after receiving the detection control information sent by the second UE, the base station compares the SINR/BLER with the SINR/BLER threshold and determines whether to adjust the transmit power of the first UE; the determination manner is similar to that of the second UE, so the details are not described herein again. For example, if a periodic triggering manner is configured, the second UE starts a timer according to an instruction of the base station, and a value of the timer is a period of reporting the SINR/BLER by the second UE; when the timer times out, the second UE sends the detection control information to the base station and reports the SINR/BLER to the base station.

In the D2D power control method according to this example, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

**Example 5**

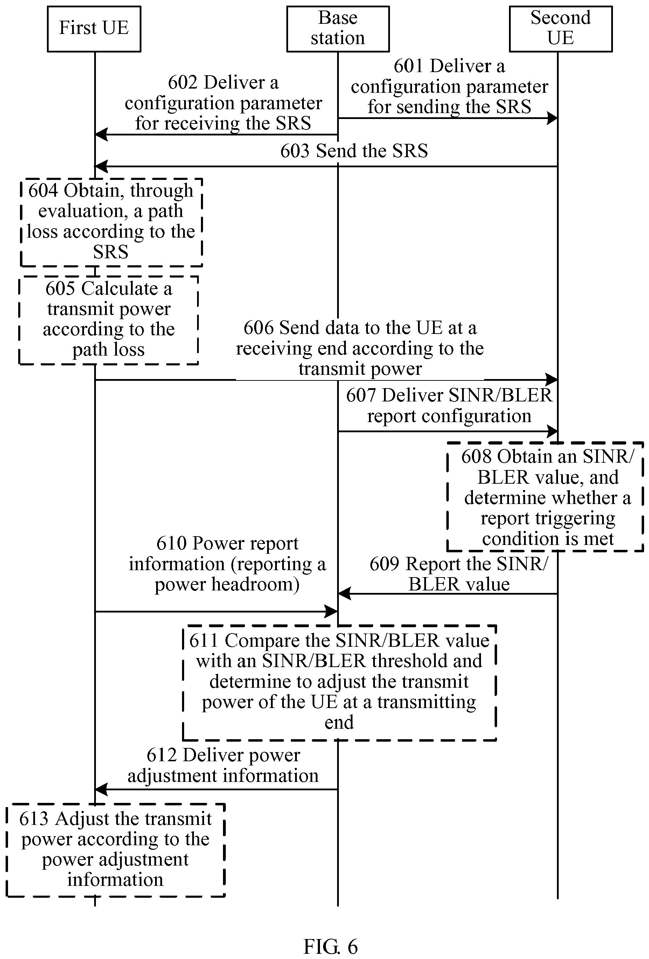

FIG. 6 shows still another example of a D2D power control method according to the present invention. In this aspect, a first UE obtains a transmit power according to a reference signal sent by a second UE, where the reference signal is an SRS; and the first UE reports a power headroom to a base station. In this embodiment, comparing an SINR/BLER with an SINR/BLER threshold can be performed by the second UE or the base station. The method may include:

601: Abase station delivers, to a second UE, an SRS configuration parameter for instructing the second UE to send the SRS.

Optionally, the SRS configuration parameter may include: SRS bandwidth: bandwidth used by a UE to send the SRS; a frequency domain location: a frequency domain location for the UE to send the SRS; a time interval: if the time interval is configured, it is an interval of periodically sending the SRS, and if the time interval is not configured, sending the SRS is not periodic and the SRS is sent only once; an SRS configuration index: a period and subframe compensation; a transmission comb: transmission comb compensation; and $n_{SRS}^{cs}$ cyclic shift.

Optionally, the parameter described above include an instruction of sending the SRS, and the second UE can send the SRS according to the parameter configured by the base station.

602: The base station delivers, to the first UE, an SRS configuration parameter for instructing the first UE to receive the SRS.

Optionally, the SRS configuration parameter for instructing the first UE to receive the SRS are the same as the SRS configuration parameter for instructing the second UE to send the SRS; the parameter may further include an instruction of receiving the SRS, and the first UE can receive the SRS according to the parameter.

Optionally, the base station can send, to the first UE, a transmit power of the second UE for sending the SRS.

603: The second UE sends the SRS according to the configuration in 601, and the first UE receives the SRS according to the configuration in 602.

604: The first UE obtains, through evaluation, a path loss.

After receiving the SRS, the first UE may obtain, through calculation, a receive power of the SRS, and obtain a path loss between the two UEs (that is, Pathloss_D2D) by calculating a difference between the transmit power of the SRS and the receive power of the SRS.

605: The first UE calculates the transmit power according to the path loss.

The first UE calculates the transmit power according to Pathloss_D2D, where an open-loop power can be calculated as follows:

$$P_{TX}(i) = \min\{ P_{CMAX}, 10\log_{10}(M_{TX}(i) + P_{o\_TX}(j) + \alpha Pathloss\_D2D)\}$$

Except Pathloss_D2D, for meanings of other parameters, reference may be made to the definition in the embodiment shown in FIG. 5.

606: The first UE sends data to the second UE according to the calculated transmit power.

607: The base station delivers SINR/BLER report configuration to the second UE.

This step is the same as that described in the example shown in FIG. 5, and the details are not described herein. The order of this step is not limited herein, and 607 is merely illustrative. In the specific implementation, it is only required that 607 is performed before the second UE receives the data sent by the first UE.

608: The second UE obtains, through parsing, the SINR/BLER of the received data, and determines whether a report triggering condition is met.

Optionally, for example, if an event triggering manner is configured in 607, the second UE compares a first adjustment reference value, that is, the SINR/BLER, obtained through parsing with a second adjustment value, that is, an expected SINR/BLER threshold, delivered by the base station, where the SINR/BLER threshold may be a first threshold (a low threshold) or a second threshold (a high threshold). Specifically, if the SINR/BLER obtained through parsing is smaller than or equal to the low threshold of the SINR/BLER or the SINR/BLER obtained through parsing is greater than or equal to the high threshold of the expected SINR/BLER, continue to perform 609.

Optionally, for example, if a periodic triggering manner is configured in 607, the second UE starts a timer according to an instruction of the base station, and a value of the timer is a period of reporting the SINR/BLER by the second UE; when the timer times out, continue to perform 609.

609: The second UE sends detection control information to the base station and reports the SINR/BLER to the base station.

610: The first UE sends power report information to the base station.

In this example, because the first UE evaluates a path loss according to the reference signal sent by the second UE, the base station does not learn the transmit power of the first UE and the first UE needs to directly report a power headroom to the base station.

Similar to an R8 mechanism, the base station can define a Pathloss_D2DChange (Pathloss_D2DChange) between two UEs in D2D, a prohibit PHR-timer (prohibit PHR-timer), and a periodic PHR-timer (periodic PHR-timer), where the two timers may be dedicated to the D2D; and the base station can send, through, for example, an RRC message, the parameter to the first UE for configuration, so that the first UE reports the power headroom according to the parameter.

Optionally, for example, the first UE starts the periodic PHR-timer and the PROHIBIT PHR-timer, and when the PROHIBIT PHR-timer times out, it is determined whether an absolute value of a difference between the path loss value calculated this time and the path loss value obtained when a PHR is reported last time is greater than the Pathloss_D2DChange; and if the difference is greater than the Pathloss_D2DChange or the periodic PHR-timer times out, the UE reports the PHR to the base station.

If the periodic PHR-timer times out, the periodic PHR-timer and the PROHIBIT PHR-timer are restarted, and if the PROHIBIT PHR-timer times out, only the PROHIBIT PHR-timer is restarted.

The implementing order of this step is not limited herein, as long as this step is performed after 604 and before 611.

611: After receiving the detection control information sent by the second UE, the base station compares the SINR/BLER and the SINR/BLER threshold and determines whether to adjust the transmit power of the first UE.

If a determination result of the base station is that the transmit power of the first UE needs to be increased and can be increased, continue to perform 612.

612: The base station delivers power adjustment information to the first UE.

Optionally, the power adjustment information in this example may include an adjustment value/compensation value of the power, an adjusted power value, and the like. Because the base station does not learn the path loss of the first UE, the power adjustment information does not include a path loss compensation value or the like.

613: The first UE adjusts the transmit power according to the power adjustment information.

Optionally, in 607 to 609 and 611 of this example, it may also be adopted that the second UE does not report the SINR/BLER to the base station, and a self-determination manner in the example shown in FIG. 5 is implemented.

In the above aspect, it is taken as an example that the reference signal sent by the second UE is an SRS; and optionally, the second UE may also send a reference signal DM-RS.

Optionally, the base station delivers, to the second UE, a DM-RS configuration parameter for instructing the second UE to send the DM-RS, where the DM-RS configuration parameter may include a DM-RS time-frequency location, a DM-RS transmit power, and the like. The parameter described above include an instruction of sending the DM-RS, and the second UE can send the DM-RS according to the parameter configured by the base station. The base station delivers, to the first UE, a DM-RS configuration parameter for instructing the first UE to receive the DM-RS, where the DM-RS configuration parameter for instructing the first UE to receive the DM-RS is the same as the DM-RS configuration parameter for instructing the second UE to send the DM-RS; the parameter include an instruction of receiving the DM-RS, and the first UE can receive the DM-RS according to the parameter. In addition, the second UE sends a transmit power of the DM-RS to the first UE.

After receiving the DM-RS, the first UE may obtain, through calculation, a receive power of the DM-RS. In LTE, the DM-RS is related to uplink data and(or) transmission control, is mainly used for channel estimation of coherent demodulation, and appears in each uplink transmitting timeslot. Because the DM-RS is related to uplink data or transmission control, when receiving DM-RS data, the first UE is capable of obtaining, through parsing, a receive power of the DM-RS.

Other steps are the same as the steps of the second UE sending the reference signal SRS, and the details are not described herein.

In the D2D power control method according to this example, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

**Example 6**

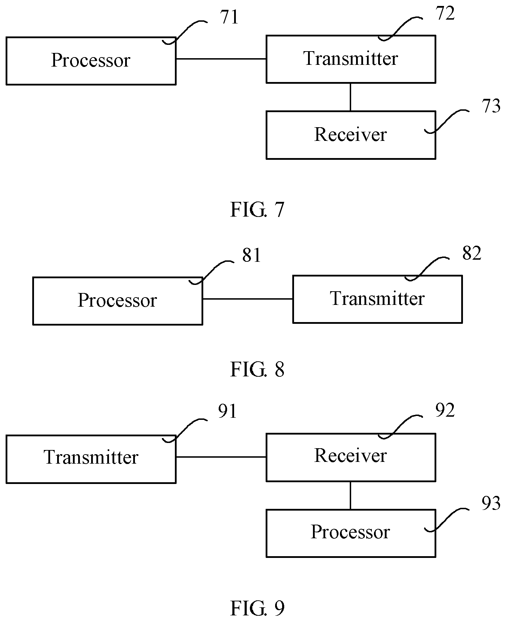

FIG. 7 shows a structure of an embodiment of a UE according to the present invention. The UE may be a first UE and can implement a D2D power control method according to any embodiment of the present invention. In this embodiment, a structure of the first UE is described briefly, and for a specific working principle of the first UE, reference may be made to the description of the method embodiments. The first UE may include a processor 71 and a transmitter 72, where

the processor 71 is configured to receive path loss information sent by a base station or a reference signal sent by a second user equipment UE, and obtain a transmit power of the UE according to the path loss information or the reference signal;

the transmitter 72 is configured to send data to the second UE based on the transmit power of the UE, so that the second UE obtains an adjustment reference value according to the data and sends detection control information to the base station according to the adjustment reference value; and

the processor 71 is further configured to receive power adjustment information which is sent by the base station according to the detection control information, and adjust, according to the power adjustment information, the transmit power of the UE.

Furthermore, the reference signal is a sounding reference signal SRS, and correspondingly,

the processor 71 is further configured to receive the reference signal sent by the second UE, and obtain a receive power of the reference signal according to the reference signal; receive a transmit power of the reference signal sent by the base station; obtain a path loss between the processor 71 and the second UE according to the receive power of the reference signal and the transmit power of the reference signal, and obtain the transmit power of the UE according to the path loss.

Furthermore, the reference signal is a demodulation reference signal DM-RS, and correspondingly,

the processor 71 is further configured to receive the reference signal sent by the second UE, and obtain a receive power of the reference signal and a transmit power of the reference signal according to the reference signal; obtain a path loss between the processor 71 and the second UE according to the receive power of the reference signal and the transmit power of the reference signal, and obtain the transmit power of the UE according to the path loss.

Furthermore, the adjustment reference value includes a first adjustment reference value obtained through parsing the data by the second UE and a second adjustment reference value configured by the base station for the second UE and sent to the second UE, where the first adjustment reference value includes at least one of the following: a signal to interference plus noise ratio SINR and a block error ratio BLER of the data, and the second adjustment reference value includes at least one of the following: an SINR threshold and a BLER threshold.

Optionally, the first UE may further include a receiver 73, configured to receive the transmit power of the UE sent by the base station.

With the UE according to this embodiment, by setting the processor, the transmitter, and the like, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

**Example 7**

FIG. 8 shows a structure of another embodiment of a UE according to the present invention. The UE may be a second UE and can implement a D2D power control method according to any embodiment of the present invention. In this embodiment, a structure of the second UE is described briefly, and for a specific working principle of the second UE, reference may be made to the description of the method embodiments. As shown in FIG. 8, the UE may include a processor 81 and a transmitter 82, where

the processor 81 is configured to receive data which is sent by a first UE based on a transmit power of the first UE, and obtain an adjustment reference value; and
the transmitter 82 is configured to send detection control information to a base station according to the adjustment reference value, so that the base station sends power adjustment information to the first UE according to the detection control information, and the first UE adjusts the transmit power of the first UE according to the power adjustment information,
where the transmit power of the first UE is obtained by the first UE according to path loss information sent by the base station or a reference signal sent by the UE.

Optionally, the processor 81 is further configured to parse the data to obtain a first adjustment reference value, and receive a second adjustment reference value configured by the base station for the UE and sent to the UE,

where the first adjustment reference value includes at least one of the following: a signal to interference plus noise ratio SINR and a block error ratio BLER of the data, and the second adjustment reference value includes at least one of the following: an SINR threshold and a BLER threshold.

Optionally, the transmitter 82 is further configured to send a transmit power of the reference signal to the first UE, so that the first UE obtains a path loss between the first UE and the UE according to a receive power of the reference signal and a receive power of a reference signal sent by the base station to the first UE.
Optionally, when the second adjustment reference value is a first threshold or a second threshold and the first threshold is smaller than the second threshold, the transmitter 82 is further configured to:

when the first adjustment reference value is smaller than the first threshold, send the detection control information to the base station, where the detection control information is used to request the base station to increase the transmit power of the first UE; or
when the first adjustment reference value is greater than the second threshold, send the detection control information to the base station, where the detection control information is used to request the base station to decrease the transmit power of the first UE.

With the UE according to this embodiment, by setting the processor and the transmitter, the first UE receives the path loss information sent by the base station or the reference signal sent by the second UE, and obtains the transmit power of the first UE according to the path loss information or the reference signal; and the base station can obtain the power adjustment information based on the first adjustment reference value which is sent by the second UE, and send the power adjustment information to the first UE, thereby solving the problem in the prior art that the power of the first UE cannot be adjusted in D2D and implementing the power control on a UE at a transmitting end in the D2D communication.

**Example 8**

FIG. 9 shows a structure of an embodiment of a base station according to the present invention. The base station can implement a D2D power control method according to any embodiment of the present invention. In this embodiment, a structure of the base station is described briefly, and for a specific working principle of the base station, reference may be made to the description of the method embodiments. As shown in FIG. 9, the base station may include a transmitter 91, a receiver 92, and a processor 93, where

the transmitter 91 is configured to send path loss information to a first user equipment UE, or send instruction information of a reference signal to the first UE and a second UE;

the receiver 92 is configured to receive detection control information which is sent by the second UE according to an adjustment reference value, where the adjustment reference value are obtained by the second UE according to data sent by the first UE based on a transmit power of the first UE; and

the processor 93 is configured to send power adjustment information to the first UE according to the detection control information, where the power adjustment information is used for the first UE to adjust the transmit power of the first UE, where the instruction information is used to instruct the first UE to receive a reference signal sent by the second UE, and instruct the second UE to send the reference signal to the first UE.

Furthermore, the adjustment reference value includes a first adjustment reference value obtained through parsing the data by the second UE and a second adjustment reference value configured by the base station for the second UE and sent to the second UE, where the first adjustment reference value includes at least one of the following: a signal to interference plus noise ratio SINR and a block error ratio BLER of the data, and the second adjustment reference value includes at least one of the following: an SINR threshold and a BLER threshold.

Optionally, the transmitter 91 is further configured to send the transmit power of the first UE to the first UE.

Furthermore, when the second adjustment reference value is a first threshold or a second threshold and the first threshold is smaller than the second threshold, the processor 93 is further configured to:

when the first adjustment reference value is smaller than the first threshold, receive the detection control information sent by the second UE, where the detection control information is used to request the base station to increase the transmit power of the first UE; or

when the first adjustment reference value is greater than the second threshold, receive the detection control information sent by the second UE, where the detection control information is used to request the base station to decrease the transmit power of the first UE.

With the base station according to this embodiment, by setting the transmitter, the processor and the like, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

**Example 9**

The present invention further provides a communication system, which can implement a D2D power control method according to any embodiment of the present invention. The communication system according to this example may include a first UE described in any embodiment of the present invention and a second UE described in any embodiment of the present invention. For a specific working principle of the communication system, reference may be made to the description of the method and device embodiments.

With the communication system according to this example, the first UE receives the path loss information sent by the base station or the reference signal sent by the second UE, and obtains the transmit power of the first UE according to the path loss information or the reference signal; and the base station can obtain the power adjustment information based on the detection control information which is sent by the second UE according to an adjustment value, and send the power adjustment information to the first UE, thereby solving the problem in the prior art that the power of the first UE cannot be adjusted in D2D and implementing the power control on a UE at a transmitting end in the D2D.

It can be clearly understood by persons skilled in the art that, for the purpose of convenient and brief description, for a detailed working process of the foregoing system, device and unit, reference may be made to the corresponding processes in the method embodiments, and the details are not described herein again.

In several embodiments provided in the present application, it should be understood that the disclosed system, device, and method may be implemented in other ways. For example, the described device embodiments are merely exemplary. For example, the unit division is merely logical function division and can be other division in actual implementation. For example, multiple units or components can be combined or integrated into another system, or some features can be ignored or not performed. Furthermore, the shown or discussed coupling or direct coupling or communication connection may be accomplished through some interfaces, and indirect coupling or communication connection between devices or units may be electrical, mechanical, or in other forms.

Units described as separate components may be or may not be physically separated. Components shown as units may be or may not be physical units, that is, may be integrated or distributed to a plurality of network units. Some or all of the units may be selected to achieve the objectives of the solutions of the embodiments according to actual demands.

In addition, various functional units according to each embodiment of the present invention may be integrated in one processing unit or may exist as various separate physical units, or two or more units may also be integrated in one unit. The integrated unit may be implemented through hardware, or may also be implemented in a form of a software functional unit.

When the integrated unit is implemented in the form of the software functional unit and sold or used as a separate product, the integrated unit may be stored in a computer readable storage medium. Therefore, the technical solutions of the present invention, or the part that makes contributions to the prior art, or the whole or a part of the technical solutions can be substantially embodied in the form of a software product. The computer software product is stored in a storage medium, and contains several instructions to instruct a computer equipment (such as, a personal computer, a server, or a network equipment) to perform all or a part of steps of the method as described in the embodiments of the present invention. The storage medium includes various media capable of storing program codes, such as, a USB flash drive, a mobile hard disk, a read-only memory (ROM, Read-Only Memory), a random access memory (RAM, Random Access Memory), a magnetic disk or an optical disk.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk or an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not cause the essence of the corresponding technical solutions to depart from the idea and scope of the present invention as it is defined by the claims.

**Claims**

1. A device-to-device D2D power control method, comprising:

    receiving, by a first user equipment UE, instruction information from a base station, to receive a reference signal sent by a second UE; receiving (201), by the first user equipment UE, the reference signal sent by the second UE; obtaining (201), by the first UE, a transmit power of the first UE according to the reference signal;
    sending (202), by the first UE, data to the second UE based on the transmit power of the first UE wherein the second UE obtains a first adjustment reference value according to the data and sends a detection control information carrying the first adjustment reference value to the base station based on a comparison of the first adjustment reference value with a second adjustment reference value configured and sent by the base station;
    receiving (203), by the first UE, power adjustment information which is sent by the base station according to the first adjustment reference value, and
    adjusting (203), by the first UE, the transmit power of the first UE according to the power adjustment information;
    wherein the first adjustment reference value comprises a signal to interference plus noise ratio SINR or a block error ratio BLER, and the second adjustment reference value comprises a SINR threshold or a BLER threshold.

2. The method according to claim 1, wherein the receiving, by the first UE, the reference signal sent by the second UE, and obtaining, by the first UE, the transmit power of the first UE according to the reference signal is specifically:

    obtaining, by the first UE, a receive power of the reference signal according to the reference signal;
    receiving, by the first UE, a transmit power of the reference signal sent by the base station; and
    obtaining, by the first UE, a path loss between the first UE and the second UE according to the receive power of the reference signal and the transmit power of the reference signal; and
    obtaining the transmit power of the first UE according to the path loss,
    wherein the reference signal is a sounding reference signal SRS.

3. The method according to claim 1, wherein the receiving, by the first UE, the reference signal sent by the second UE, and obtaining, by the first UE, the transmit power of the first UE according to the reference signal is specifically:

receiving, by the first UE, a transmit power of the reference signal sent from the second UE and obtaining, by the first UE, a receive power of the reference signal according to the reference signal; and
obtaining, by the first UE, a path loss between the first UE and the second UE according to the receive power of the reference signal and the transmit power of the reference signal; and
obtaining the transmit power of the first UE according to the path loss,
wherein the reference signal is a demodulation reference signal DM-RS.

4. A device-to-device D2D power control method, comprising:

receiving, by a second user equipment UE, instruction information from a base station, to send a reference signal to a first UE; sending (201), by the second user equipment UE, the reference signal to the first UE;
receiving (202, 301), by the second UE, data which is sent by the first UE based on a transmit power of the first UE;
obtaining (301), by the second UE, a first adjustment reference value according to the received data and a second adjustment reference value configured and sent by the base station;
sending (302), by the second UE, a detection control information carrying the first adjustment reference value to the base station based on a comparison of the first adjustment reference value with the second adjustment reference value;
wherein power adjustment information according to the first adjustment reference value is sent from the base station to the first UE, the transmit power of the first UE is adjusted by the first UE according to the power adjustment information, and the first adjustment reference value comprises a signal to interference plus noise ratio SINR or a block error ratio BLER, and the second adjustment reference value comprises a SINR threshold or a BLER threshold.

5. A device-to-device D2D power control method, comprising:

sending (401), by a base station, instruction information of a reference signal to a first user equipment UE and a second UE;
sending, by the base station, a second adjustment reference value to the second UE;
receiving (402), by the base station, a detection control information carrying a first adjustment reference value sent by the second UE based on a comparison of the first adjustment reference value with the second adjustment reference value configured and sent by a base station; and
sending (403), by the base station, power adjustment information to the first UE according to the first adjustment reference value, the power adjustment information being used by the first UE to adjust the transmit power of the first UE;
wherein the first adjustment reference value is obtained by the second UE according to data which is sent by the first UE based on transmit power of the first UE according to the reference signal;
the instruction information is used to instruct the first UE to receive the reference signal sent by the second UE, and instruct the second UE to send the reference signal to the first UE; and
the first adjustment reference value comprises a signal to interference plus noise ratio SINR or a block error ratio BLER, and the second adjustment reference value comprises a SINR threshold or a BLER threshold.

6. A user equipment UE, comprising:

a receiver (73), configured to receive instruction information sent by a base station to instruct the first user equipment UE to receive a reference signal sent by a second UE; the receiver (73) further configured to receive the reference signal sent by the second user equipment UE, and obtain a transmit power of the UE according to the reference signal;
a transmitter (72), configured to send data to the second UE based on the transmit power of the UE wherein the second UE obtains a first adjustment reference value according to the data and sends a detection control information carrying the first adjustment reference value to the base station based on a comparison of the first adjustment reference value with a second adjustment reference value configured and sent by the base station;
the receiver (73), further configured to receive power adjustment information which is sent by the base station according to the first adjustment reference value;
a processor (71), configured to adjust the transmit power of the UE according to the power adjustment information;
wherein the first adjustment reference value comprises a signal to interference plus noise ratio SINR or a block error ratio BLER, and the second adjustment reference value comprises a SINR threshold or a BLER threshold.

**7.** The UE according to claim 6, wherein the reference signal is a sounding reference signal SRS:

the receiver is further configured to
obtain a receive power of the reference signal according to the reference signal,
receive a transmit power of the reference signal sent by the base station,
obtain a path loss between the UE and the second UE according to the receive power of
the reference signal and the transmit power of the reference signal, and
obtain the transmit power of the UE according to the path loss.

**8.** The UE according to claim 6, wherein the reference signal is a demodulation reference signal DM-RS:

the receiver is further configured to
receive a transmit power of the reference signal sent by the second UE and obtain a
receive power of the reference signal according to the reference signal,
obtain a path loss between the UE and the second UE according to the receive power of
the reference signal and the transmit power of the reference signal; and
obtain the transmit power of the UE according to the path loss.

**9.** A user equipment UE, comprising:

a receiver configured to receive instruction information sent by a base station to instruct the UE to send a reference signal to a first UE;
a transmitter (82), configured to send a reference signal to the first UE;
the receiver further configured to receive data which is sent by the first UE based on a transmit power of the first UE, and obtain a first adjustment reference value according to the data and a second adjustment reference value configured and sent by the base station;
the transmitter (82), further configured to send a detection control information carrying the first adjustment reference value to the base station based on a comparison of the first adjustment reference value with the second adjustment reference value;
wherein power adjustment information according to the first adjustment reference value is sent from the base station to the first UE, the transmit power of the first UE is adjusted by the first UE according to the power adjustment information, and the first adjustment reference value comprises a signal to interference plus noise ratio SINR or a block error ratio BLER, and the second adjustment reference value comprises a SINR threshold or a BLER threshold.

**10.** A base station, comprising:

a transmitter (91), configured to
send instruction information of a reference signal to a first user equipment UE and a second UE;
send a second adjustment reference value to the second UE;
a receiver (92), configured to receive a detection control information carrying a first adjustment reference value sent by the second UE based on a comparison of the first adjustment reference value with the second adjustment reference value; and
the transmitter (91), further configured to send power adjustment information to the first UE according to the first adjustment reference value, the power adjustment information being used by the first UE to adjust the transmit power of the first UE;
wherein the first adjustment reference value is obtained by the second UE according to data which is sent by the first UE based on the transmit power of the first UE according to the reference signal;
the instruction information is used to instruct the first UE to receive a reference signal sent by the second UE, or instruct the second UE to send the reference signal to the first UE; and
the first adjustment reference value comprises a signal to interference plus noise ratio SINR or a block error ratio BLER, and the second adjustment reference value comprises a SINR threshold or a BLER threshold.

**Patentansprüche**

**1.** "Device-to-Device" (D2D)-Leistungsregelungsverfahren, umfassend:

Empfangen, durch eine erste Benutzervorrichtung (UE), von Anweisungsinformationen von einer Basisstation zum Empfangen eines durch eine zweite UE gesendeten Referenzsignals; Empfangen (201) des durch die zweite UE gesendeten Referenzsignals durch die erste Benutzervorrichtung (UE);
Erhalten (201), durch die erste UE, einer Sendeleistung der ersten UE entsprechend dem Referenzsignal;
Senden (202), durch die erste UE, von Daten zu der zweiten UE basierend auf der Sendeleistung der ersten UE, wobei die zweite UE einen ersten Einstellungsreferenzwert entsprechend den Daten erhält und eine Erfassungssteuerungsinformation, welche den ersten Einstellungsreferenzwert trägt, die auf einem Vergleich des ersten Einstellungsreferenzwertes mit einem durch die Basisstation konfigurierten und gesendeten zweiten Einstellungsreferenzwert basiert, an die Basisstation sendet;
Empfangen (203), durch die erste UE, einer Leistungsregelungsinformation, die entsprechend dem ersten Einstellungsreferenzwert durch die Basisstation gesendet wurde,
und
Einstellen (203), durch die erste UE, der Sendeleistung der ersten UE entsprechend der Leistungsregelungsinformation;
wobei der erste Einstellungsreferenzwert ein Signal-zu-Interferenz-plus-Rausch-Verhältnis (SINR) oder eine Blockfehlerhäufigkeit (BLER) umfasst und der zweite Einstellungsreferenzwert einen SINR-Schwellenwert oder einen BLER-Schwellenwert umfasst.

2. Verfahren nach Anspruch 1, wobei das Empfangen, durch die erste UE, des durch die zweite UE gesendeten Referenzsignals und das Erhalten, durch die erste UE, der Sendeleistung von der ersten UE entsprechend dem Referenzsignal im Einzelnen ist:

Erhalten, durch die erste UE, einer Empfangsleistung des Referenzsignals entsprechend dem Referenzsignal;
Empfangen, durch die erste UE, einer Sendeleistung des Referenzsignals, das durch die Basisstation gesendet wurde; und
Erhalten, durch die erste UE, eines Pfadverlustes zwischen der ersten UE und der zweiten UE entsprechend der Empfangsleistung des Referenzsignals und der Sendeleistung des Referenzsignals; und
Erhalten der Sendeleistung der ersten UE entsprechend dem Pfadverlust,
wobei das Referenzsignal ein "Sounding-Reference-Signal" (SRS) ist.

3. Verfahren nach Anspruch 1, wobei das Empfangen, durch die erste UE, des durch die zweite UE gesendeten Referenzsignals und das Erhalten, durch die erste UE, der Sendeleistung von der ersten UE entsprechend dem Referenzsignal im Einzelnen ist:

Empfangen, durch die erste UE, einer Sendeleistung des durch die zweite UE gesendeten Referenzsignals und Erhalten, durch die erste UE, einer Empfangsleistung des Referenzsignals entsprechend dem Referenzsignal; und
Erhalten, durch die erste UE, eines Pfadverlustes zwischen der ersten UE und der zweiten UE entsprechend der Empfangsleistung des Referenzsignals und der Sendeleistung des Referenzsignals; und
Erhalten der Sendeleistung der ersten UE entsprechend dem Pfadverlust,
wobei das Referenzsignal ein Demodulationsreferenzsignal (DM-RS) ist.

4. "Device-to-Device" (D2D)-Leistungsregelungsverfahren, umfassend:

Empfangen, durch eine zweite Benutzervorrichtung (UE), von Anweisungsinformationen von einer Basisstation zum Senden eines Referenzsignals an eine erste UE; Senden (201), durch die zweite Benutzervorrichtung (UE), des Referenzsignals an die erste UE;
Empfangen (202, 301), durch die zweite UE, von Daten, die durch die erste UE basierend auf einer Sendeleistung der ersten UE gesendet wurden;
Erhalten (301), durch die zweite UE, eines ersten Einstellungsreferenzwertes entsprechend der empfangenen Daten und eines zweiten Einstellungsreferenzwertes, der durch die Basisstation konfiguriert und gesendet wurde;
Senden (302), durch die zweite UE, einer Erfassungssteuerungsinformation, welche den ersten Einstellungsreferenzwert trägt, die auf einem Vergleich von dem ersten Einstellungsreferenzwert mit dem zweiten Einstellungsreferenzwert basiert, an die Basisstation;
wobei die Leistungseinstellungsinformation entsprechend dem ersten Einstellungsreferenzwert durch die Basisstation an die erste UE gesendet wurde, wobei die Sendeleistung der ersten UE durch die erste UE entsprechend der Leistungseinstellungsinformation eingestellt wird und der erste Einstellungsreferenzwert ein Signal-zu-Interferenz-plus-Rausch-Verhältnis (SINR) oder eine Blockfehlerhäufigkeit (BLER) umfasst und der zweite Einstellungsreferenzwert einen SINR-Schwellenwert oder einen BLER-Schwellenwert umfasst.

5. "Device-to-Device" (D2D)-Leistungsregelungsverfahren, umfassend:

Senden (401), durch eine Basisstation, von Anweisungsinformationen eines Referenzsignals an eine erste Benutzervorrichtung (UE) und eine zweite UE;

Senden, durch die Basisstation, eines zweiten Einstellungsreferenzwertes an die zweite UE;

Empfangen (402), durch die Basisstation, einer Erfassungssteuerungsinformation, welche einen ersten Einstellungsreferenzwert trägt, die basierend auf einem Vergleich von dem ersten Einstellungsreferenzwert mit dem zweiten Einstellungsreferenzwert, der durch eine Basisstation konfiguriert und gesendet wurde, durch die zweite UE gesendet wurde; und

Senden (403), durch die Basisstation, einer Leistungseinstellungsinformation an die erste UE entsprechend dem ersten Einstellungsreferenzwert, wobei die Leistungseinstellungsinformation durch die erste UE verwendet wird, um die Sendeleistung der ersten UE einzustellen;

wobei der erste Einstellungsreferenzwert durch die zweite UE entsprechend den Daten erhalten wird, die durch die erste UE basierend auf der Sendeleistung der ersten UE entsprechend dem Referenzsignal gesendet wurden;

wobei die Anweisungsinformationen zur Anweisung der ersten UE verwendet werden, das durch die zweite UE gesendete Referenzsignal zu empfangen, und Anweisen der zweiten UE zum Senden des Referenzsignals an die erste UE; und

wobei der erste Einstellungsreferenzwert ein Signal-zu-Interferenz-plus-Rausch-Verhältnis (SINR) oder eine Blockfehlerhäufigkeit (BLER) umfasst und der zweite Einstellungsreferenzwert einen SINR-Schwellenwert oder einen BLER-Schwellenwert umfasst.

6. Benutzervorrichtung (UE), umfassend:

einen Empfänger (73), der konfiguriert ist, die durch eine Basisstation gesendeten Anweisungsinformationen zu empfangen, welche die erste Benutzervorrichtung (UE) anweisen, ein durch eine zweite UE gesendetes Referenzsignal zu empfangen;

wobei der Empfänger (73) ferner konfiguriert ist, das durch die zweite Benutzervorrichtung (UE) gesendete Referenzsignal zu empfangen, und eine Sendeleistung der UE entsprechend dem Referenzsignal zu erhalten;

einen Sender (72), der konfiguriert ist, Daten an die zweite UE basierend auf der Sendeleistung der UE zu senden, wobei die zweite UE einen ersten Einstellungsreferenzwert entsprechend den Daten erhält und eine Erfassungssteuerungsinformation, welche den ersten Einstellungsreferenzwert trägt, die auf einem Vergleich des ersten Einstellungsreferenzwertes mit einem durch die Basisstation konfigurierten und gesendeten zweiten Einstellungsreferenzwert basiert, an die Basisstation sendet;

wobei der Empfänger (73) ferner konfiguriert ist, eine Leistungseinstellungsinformation, die entsprechend dem ersten Einstellungsreferenzwert durch die Basisstation gesendet wurde, zu empfangen;

einen Prozessor (71), der konfiguriert ist, die Sendeleistung der UE entsprechend der Leistungseinstellungsinformation einzustellen;

wobei der erste Einstellungsreferenzwert ein Signal-zu-Interferenz-plus-Rausch-Verhältnis (SINR) oder eine Blockfehlerhäufigkeit (BLER) umfasst und der zweite Einstellungsreferenzwert einen SINR-Schwellenwert oder einen BLER-Schwellenwert umfasst.

7. UE nach Anspruch 6, wobei das Referenzsignal ein "Sounding-Reference-Signal" (SRS) ist:

wobei der Empfänger ferner konfiguriert ist,

eine Empfangsleistung des Referenzsignals entsprechend dem Referenzsignal zu erhalten,

eine Sendeleistung des durch die Basisstation gesendeten Referenzsignals zu empfangen, einen Pfadverlust zwischen der UE und der zweiten UE entsprechend der Empfangsleistung des Referenzsignals und der Sendeleistung des Referenzsignals zu erhalten, und

die Sendeleistung der UE entsprechend dem Pfadverlust zu erhalten.

8. UE nach Anspruch 6, wobei das Referenzsignal ein Demodulationsreferenzsignal (DM-RS) ist:

wobei der Empfänger ferner konfiguriert ist,

eine Sendeleistung des durch die zweite UE gesendeten Referenzsignals zu empfangen und eine Empfangsleistung des Referenzsignals entsprechend dem Referenzsignal zu erhalten,
einen Pfadverlust zwischen der UE und der zweiten UE entsprechend der Empfangsleistung des Referenzsignals und der Sendeleistung des Referenzsignals zu erhalten; und
die Sendeleistung der UE entsprechend dem Pfadverlust zu erhalten.

9. Benutzervorrichtung (UE), umfassend:

einen Empfänger, der konfiguriert ist
durch eine Basisstation gesendete Anweisungsinformationen zu empfangen, welche die UE anweisen, ein Referenzsignal an eine erste UE zu senden;
einen Sender (82), der konfiguriert ist, ein Referenzsignal an die erste UE zu senden;
wobei der Empfänger ferner konfiguriert ist,
die durch die erste UE gesendeten Daten basierend auf einer Sendeleistung der ersten UE zu empfangen, und einen ersten Einstellungsreferenzwert entsprechend den Daten und einen durch die Basisstation konfigurierten und gesendeten zweiten Einstellungsreferenzwert zu erhalten;
wobei der Sender (82) ferner konfiguriert ist, eine Erfassungssteuerungsinformation, welche den ersten Einstellungsreferenzwert trägt, die auf einem Vergleich von dem ersten Einstellungsreferenzwert mit dem zweiten Einstellungsreferenzwert basiert, an die Basisstation zu senden;
wobei die Leistungseinstellungsinformation entsprechend dem ersten Einstellungsreferenzwert durch die Basisstation an die erste UE gesendet wird, wobei die Sendeleistung der ersten UE durch die erste UE entsprechend der Leistungseinstellungsinformation eingestellt wird und der erste Einstellungsreferenzwert ein Signal-zu-Interferenz-plus-Rausch-Verhältnis (SINR) oder eine Blockfehlerhäufigkeit (BLER) umfasst und der zweite Einstellungsreferenzwert einen SINR-Schwellenwert oder einen BLER-Schwellenwert umfasst.

10. Basisstation, umfassend:

einen Sender (91), der konfiguriert ist
Anweisungsinformationen eines Referenzsignals an eine erste Benutzervorrichtung (UE) und eine zweite UE zu senden;
einen zweiten Einstellungsreferenzwert an die zweite UE zu senden;
einen Empfänger (92), der konfiguriert ist, eine Erfassungssteuerungsinformation zu empfangen, welche einen ersten Einstellungsreferenzwert trägt, die durch die zweite UE basierend auf einem Vergleich von dem ersten Einstellungsreferenzwert mit dem zweiten Einstellungsreferenzwert gesendet wurde; und
wobei der Sender (91) ferner konfiguriert ist, eine Leistungseinstellungsinformation an die erste UE entsprechend dem ersten Einstellungsreferenzwert zu senden, wobei die Leistungseinstellungsinformation durch die erste UE verwendet wird, um die Sendeleistung der ersten UE einzustellen;
wobei der erste Einstellungsreferenzwert durch die zweite UE entsprechend den Daten erhalten wird, die durch die erste UE basierend auf der Sendeleistung der ersten UE entsprechend dem Referenzsignal gesendet wurden;
wobei die Anweisungsinformationen verwendet werden, um die erste UE anzuweisen, das durch die zweite UE gesendetes Referenzsignal zu empfangen oder die zweite UE anzuweisen, das Referenzsignal an die erste UE zu senden; und
wobei der erste Einstellungsreferenzwert ein Signal-zu-Interferenz-plus-Rausch-Verhältnis (SINR) oder eine Blockfehlerhäufigkeit (BLER) umfasst und der zweite Einstellungsreferenzwert einen SINR-Schwellenwert oder einen BLER-Schwellenwert umfasst.

## Revendications

1. Procédé de régulation de puissance de dispositif à dispositif, D2D, comprenant :

la réception, par un premier équipement utilisateur, EU, d'informations de demande provenant d'une station de base, pour recevoir un signal de référence envoyé par un second EU ;
la réception (201), par le premier équipement utilisateur, EU, du signal de référence envoyé par le second EU ;
l'obtention (201), par le premier EU, d'une puissance d'émission du premier EU en fonction du signal de référence ;
l'envoi (202), par le premier EU au second EU, de données sur la base de puissance d'émission du premier EU, le second EU obtenant une première valeur de référence de réglage en fonction de ces données et envoyant des informations de commande de détection portant la première valeur de référence de réglage à la station de base, sur la base d'une comparaison de la première valeur de référence de réglage avec une seconde valeur de référence de réglage configurée et envoyée par la station de base ;

la réception (203), par le premier EU, d'informations de réglage de puissance qui sont envoyées par la station de base en fonction de la première valeur de référence de réglage,

et

le réglage (203), par le premier EU, de la puissance d'émission du premier EU en fonction des informations de réglage de puissance ;

dans lequel la première valeur de référence de réglage comprend un rapport entre signal et interférence plus bruit, SINR, ou en un taux d'erreur sur les blocs, BLER, et la seconde valeur de référence de réglage comprend un seuil SINR ou un seuil BLER.

2. Procédé selon la revendication 1, dans lequel la réception, par le premier EU, du signal de référence envoyé par le second EU, et l'obtention, par le premier EU, de la puissance d'émission du premier EU en fonction du signal de référence est spécifiquement :

l'obtention, par le premier EU, d'une puissance de réception du signal de référence en fonction du signal de référence ;

la réception, par le premier EU, d'une puissance d'émission du signal de référence envoyé par la station de base ; et

l'obtention, par le premier EU, d'un affaiblissement de propagation entre le premier EU et le second EU en fonction de la puissance de réception du signal de référence et de la puissance d'émission du signal de référence ; et

l'obtention de la puissance d'émission du premier EU en fonction de l'affaiblissement de propagation, le signal de référence étant un signal de référence de sondage, SRS.

3. Procédé selon la revendication 1, dans lequel la réception, par le premier EU, du signal de référence envoyé par le second EU et l'obtention, par le premier EU, de la puissance d'émission du premier EU en fonction du signal de référence est spécifiquement :

la réception, par le premier EU, d'une puissance d'émission du signal de référence envoyé depuis le second EU et l'obtention, par le premier EU, d'une puissance de réception du signal de référence en fonction du signal de référence ; et

l'obtention, par le premier EU, d'un affaiblissement de propagation entre le premier EU et le second EU en fonction de la puissance de réception du signal de référence et de la puissance d'émission du signal de référence ; et

l'obtention de la puissance d'émission du premier EU en fonction de l'affaiblissement de propagation, le signal de référence étant un signal de référence de démodulation, DM-RS.

4. Procédé de régulation de puissance de dispositif à dispositif, D2D, comprenant :

la réception, par un second équipement utilisateur, EU, d'informations de demande provenant d'une station de base, pour envoyer un signal de référence à un premier EU ;

l'envoi (201), par le second équipement utilisateur, EU, du signal de référence au premier EU;

la réception (202, 301), par le premier EU, de données qui sont envoyées par le premier EU, sur la base d'une puissance d'émission du premier EU ;

l'obtention (301), par le second EU, d'une première valeur de référence de réglage en fonction des données reçues et d'une seconde valeur de référence de réglage configurée et envoyée par la station de base ;

l'envoi (302), par le second EU, d'informations de commande de détection portant la première valeur de référence de réglage à la station de base, sur la base d'une comparaison de la première valeur de référence de réglage avec la seconde valeur de référence de réglage ;

dans lequel les informations de réglage de puissance en fonction de la première valeur de référence de réglage sont envoyées de la station de base au premier EU, la puissance d'émission du premier EU est réglée par le premier EU en fonction des informations de réglage de puissance, et la première valeur de référence de réglage comprend un rapport entre signal et interférence plus bruit, SINR, ou en un taux d'erreur sur les blocs, BLER, et la seconde valeur de référence de réglage comprend un seuil SINR ou en un seuil BLER.

**5.** Procédé de régulation de puissance de dispositif à dispositif, D2D, comprenant :

l'envoi (401), par une station de base, d'informations de demande d'un signal de référence à un premier équipement utilisateur, EU, et à un second EU ;
l'envoi, par la station de base, d'une seconde valeur de référence de réglage au second EU;
la réception (402), par la station de base, d'informations de commande de détection portant une première valeur de référence de réglage envoyées par le second EU, sur la base d'une comparaison de la première valeur de référence de réglage avec la seconde valeur de référence de réglage configurée et envoyée par une station de base ; et
l'envoi (403), par la station de base, d'informations de réglage de puissance au premier EU en fonction de la première valeur de référence de réglage, ces informations de réglage de puissance étant utilisées par le premier EU pour régler la puissance d'émission du premier EU;
dans lequel la première valeur de référence de réglage est obtenue par le second EU en fonction des données qui sont envoyées par le premier EU, sur la base de la puissance d'émission du premier EU en fonction du signal de référence ;
les informations de demande sont utilisées pour demander au premier EU de recevoir le signal de référence envoyé par le second EU, et pour demander au second EU d'envoyer le signal de référence au premier EU ; et
la première valeur de référence de réglage comprend un rapport entre signal et interférence plus bruit, SINR, ou un taux d'erreur sur les blocs, BLER, et la seconde valeur de référence de réglage comprend un seuil SINR ou un seuil BLER.

**6.** Équipement utilisateur EU comprenant :

un récepteur (73), configuré de façon à recevoir des informations de demande envoyées par une station de base de façon à demander au premier équipement utilisateur, EU, de recevoir un signal de référence envoyé par un second EU;
ce récepteur (73) étant configuré en outre de façon à recevoir le signal de référence envoyé par le second équipement utilisateur, EU, et à obtenir une puissance d'émission de l'EU en fonction du signal de référence ;
un émetteur (72), configuré de façon à envoyer des données au second EU, sur la base de la puissance d'émission de l'EU, le second EU obtenant une première valeur de référence de réglage en fonction des données et envoyant des informations de commande de détection portant la première valeur de référence de réglage à la station de base, sur la base d'une comparaison de la première valeur de référence de réglage avec une seconde valeur de référence de réglage configurée et envoyée par la station de base ;
le récepteur (73) étant configuré en outre de façon à recevoir des informations de réglage de puissance qui sont envoyées par la station de base en fonction de la première valeur de référence de réglage ;
un processeur (71), configuré de façon à régler la puissance d'émission de l'EU en fonction des informations de réglage de puissance ;
dans lequel la première valeur de référence de réglage comprend un rapport entre signal et interférence plus bruit, SINR, ou un taux d'erreur sur les blocs, BLER, et la seconde valeur de référence de réglage comprend un seuil SINR ou un seuil BLER.

**7.** EU selon la revendication 6, dans lequel le signal de référence est un signal de référence de sondage, SRS :

le récepteur est configuré en outre de façon à :

obtenir une puissance de réception du signal de référence en fonction du signal de référence ;
recevoir une puissance d'émission du signal de référence envoyé par la station de base, obtenir un affaiblissement de propagation entre l'EU et le second EU en fonction de la puissance de réception du signal de référence et de la puissance d'émission du signal de référence ; et à
obtenir la puissance d'émission de l'EU en fonction de l'affaiblissement de propagation.

**8.** EU selon la revendication 6, dans lequel le signal de référence est un signal de référence de démodulation, DM-RS :

le récepteur est configuré en outre de façon à
recevoir une puissance d'émission du signal de référence envoyé par le second EU, et à obtenir une puissance de réception du signal de référence en fonction du signal de référence,
obtenir un affaiblissement de propagation entre l'EU et le second EU en fonction de la puissance de réception du signal de référence et de la puissance d'émission du signal de référence ; et à

obtenir la puissance d'émission de l'EU en fonction de l'affaiblissement de propagation.

9. Équipement utilisateur EU comprenant :

un récepteur configuré de façon à recevoir des informations de demande envoyées par une station de base pour demander à l'EU d'envoyer un signal de référence à un premier EU ;
un émetteur (82), configuré de façon à envoyer un signal de référence au premier EU ;
le récepteur étant configuré en outre de façon à
recevoir des données qui sont envoyées par le premier EU, sur la base d'une puissance d'émission du premier EU ; et à
obtenir une première valeur de référence de réglage en fonction des données et d'une seconde valeur de référence de réglage configurée et envoyée par la station de base ;
l'émetteur (82) étant configuré en outre de façon à envoyer des informations de commande de détection portant la première valeur de référence de réglage à la station de base, sur la base d'une comparaison de la première valeur de référence de réglage avec la seconde valeur de référence de réglage ;
dans lequel les informations de réglage de puissance en fonction de la première valeur de référence de réglage sont envoyées de la station de base au premier EU, la puissance d'émission du premier EU est réglée par le premier EU en fonction des informations de réglage de puissance, et la première valeur de référence de réglage comprend un rapport entre signal et interférence plus bruit, SINR, ou un taux d'erreur sur les blocs, BLER, et la seconde valeur de référence de réglage comprend un seuil SINR ou un seuil BLER.

10. Station de base comprenant :

un émetteur (91), configuré de façon à :

envoyer des informations de demande d'un signal de référence à un premier équipement utilisateur, EU, et à un second EU ;
envoyer une seconde valeur de référence de réglage au second EU ;
un récepteur (92), configuré de façon à recevoir des informations de commande de détection portant une première valeur de référence de réglage envoyée par le second EU, sur la base d'une comparaison de la première valeur de référence de réglage avec la seconde valeur de référence de réglage ; et
l'émetteur (91) étant configuré en outre de façon à envoyer des informations de réglage de puissance au premier EU en fonction de la première valeur de référence de réglage, ces informations de réglage de puissance étant utilisées par le premier EU pour régler la puissance d'émission du premier EU ;
dans lequel la première valeur de référence de réglage est obtenue par le second EU en fonction des données qui sont envoyées par le premier EU, sur la base de la puissance d'émission du premier EU en fonction du signal de référence ;
les informations de demande sont utilisées pour demander au premier EU de recevoir un signal de référence envoyé par le second EU, ou pour demander au second EU d'envoyer le signal de référence au premier EU ; et
dans lequel la première valeur de référence de réglage comprend un rapport entre signal et interférence plus bruit, SINR, ou un taux d'erreur sur les blocs, BLER, et la seconde valeur de référence de réglage comprend un seuil SINR ou un seuil BLER.

eNB

UE1

UE2

UE3

FIG. 1

| The first UE receives path loss information sent by a base station or a reference signal sent by a second UE, and obtains a transmit power according to the path loss information or the reference signal | 201 |

| The first UE sends data to the second UE by using the transmit power of the first UE | 202 |

| The first UE receives power adjustment information which is sent by the base station according to the detection control information, and adjusts the transmit power of the first UE according to the power adjustment information | 203 |

FIG. 2

A second UE receives data which is sent by a first UE based on a transmit power of the first UE, and obtains an adjustment reference value ⟍ 30 1

The second UE sends detection control information to the base station according to the adjustment reference value ⟍ 30 2

FIG. 3

A base station sends path loss information to a first user equipment UE, or sends instruction information of a reference signal to the first UE and a second UE ⟍ 401

The base station receives detection control information sent by the second UE ⟍ 402

The base station sends power adjustment information to the first UE according to the detection control information ⟍ 403

FIG. 4

| First UE | Base station | Second UE |

501 Deliver an expected SINR/BLER threshold

502 Deliver a reference path loss

503 Calculate a transmit power according to the reference path loss

504 Send data to the UE at a receiving end according to the transmit power

505 Compare an SINR/BLER value of the data with the SINR/BLER threshold

507 Power report information (maximum transmit power)

506 Send detection control information

508 Determine to adjust the transmit power of the UE at a transmitting end

509 Deliver power adjustment information

510 Adjust the transmit power according to the power adjustment information

FIG. 5

FIG. 6

71

| Processor |

72

| Transmitter |

73

| Receiver |

FIG. 7

81

| Processor |

82

| Transmitter |

FIG. 8

91

| Transmitter |

92

| Receiver |

93

| Processor |

FIG. 9

**EP 2 770 786 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009325625 A1